(19) Europäisches Patentamt / European Patent Office / Office européen des brevets

(11) **EP 2 581 347 A1**

(12) **EUROPEAN PATENT APPLICATION**
published in accordance with Art. 153(4) EPC

(43) Date of publication:
**17.04.2013 Bulletin 2013/16**

(51) Int Cl.:
*C02F 1/44* (2006.01)    *B01D 21/00* (2006.01)
*B01D 21/24* (2006.01)    *B01D 61/02* (2006.01)
*B01D 61/14* (2006.01)    *B01D 61/58* (2006.01)
*C02F 3/12* (2006.01)

(21) Application number: **11792240.1**

(22) Date of filing: **12.05.2011**

(86) International application number:
**PCT/JP2011/060915**

(87) International publication number:
**WO 2011/155282 (15.12.2011 Gazette 2011/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2011 JP 2011014391**
         **09.06.2010 JP 2010132057**

(71) Applicant: **Kobelco Eco-Solutions Co., Ltd
Kobe-shi, Hyogo 651-0072 (JP)**

(72) Inventors:
• **TAKATA, Kazutaka
Kobe-shi, Hyogo 651-0072 (JP)**

• **SATO, Hiromi
Kobe-shi, Hyogo 651-0072 (JP)**
• **ITO, Yutaka
Tokyo 141-0001 (JP)**
• **SHIMADA, Mitsushige
Kobe-shi, Hyogo 651-2241 (JP)**
• **TACHIMI, Tomoyuki
Kobe-shi, Hyogo 651-2241 (JP)**
• **NOSHITA, Masanobu
Kobe-shi, Hyogo 651-0072 (JP)**

(74) Representative: **Isarpatent
Patent- und Rechtsanwälte
Postfach 44 01 51
80750 München (DE)**

(54) **FRESH WATER-GENERATING DEVICE AND FRESH WATER-GENERATING METHOD**

(57) An object of the present invention is to provide a fresh water generating apparatus that is capable of efficiently producing fresh water according to an intended use, while utilizing wastewater. Provided is a fresh water generating apparatus equipped with a seawater-treating reverse osmosis membrane device that produces fresh water from seawater by a reverse osmosis membrane, which includes: a mixing section that mixes wastewater as dilution water with a portion of seawater to be subjected to membrane treatment to produce mixed water; a first seawater-treating reverse osmosis membrane device that acts as the seawater-treating reverse osmosis membrane device to filter the mixed water; and a second seawater-treating reverse osmosis membrane device that acts as the seawater-treating reverse osmosis membrane device to filter the remaining portion of the seawater to be subjected to membrane treatment, in an unmixed state with the dilution water.

Fig. 1

## Description

### FIELD OF THE INVENTION

The present invention relates to a fresh water generating apparatus and a fresh water generating method, and more specifically relates to a fresh water generating apparatus and a fresh water generating method that generate fresh water by way of filtration using a reverse osmosis membrane.

### BACKGROUND OF THE INVENTION

In recent years, there has been a problem that rain falls locally or in a short period of time due to global warming or the like and hence water resources are unevenly distributed geographically or temporally, or a water holding capacity of a mountainous area is lowered due to decline in forest industry or deforestation, which leads to difficulty in stably securing water resources.

In order to stably secure water resources, there has been proposed desalinating seawater by filtration process using a reverse osmosis membrane (RO membrane), for example, in seafront areas (e.g., Patent Document 1).

### PRIOR ART REFERENCE

### PATENT DOCUMENT

Patent Document 1: Japanese Patent Application Laid-open No. 2008-55317

### DISCLOSURE OF THE INVENTION

### PROBLEMS TO BE SOLVED BY THE INVENTION

However, the above technique for desalinating seawater poses a problem in that filtration of seawater by a reverse osmosis membrane (RO membrane) requires seawater to be pressurized and pressure-fed to a reverse osmosis membrane unit by a pump or the like, and therefore the higher the salt concentration (salinity) of seawater, the larger the energy required.

Meanwhile, separately from the above seawater, for example, biologically treated water and sedimentation treated water are mostly discharged as final effluent into the oceans or rivers while mostly are not effectively used, in which the biologically treated water is produced by biological treatment of wastewater containing organic matter, a typical example of which is sewage water (hereinafter referred also to "organic wastewater"), and the sedimentation treated water is formed by separation by sedimentation of wastewater containing inorganic matter such as heavy metal, a typical example of which is wastewater of a factory of manufacturing metal such as steel (hereinafter referred also to "inorganic wastewater").

In view of the above, a method is conceivable, in which wastewater or final effluent is mixed as dilution water with seawater to produce mixed water; and this mixed water is subjected to membrane treatment by a reverse osmosis membrane device.

According to the above method, in which wastewater or final effluent having a lower salt concentration than seawater is mixed as dilution water with seawater to produce mixed water; and this mixed water is subjected to membrane treatment to produce fresh water, it is possible to prevent or suppress increase in pressure for pressure-feeding mixed water into a reverse osmosis membrane device, as compared with the case where seawater is pressure-fed thereinto. Thus, there are advantageous effects that it is possible to prevent or suppress increase in the amount of energy required for pressure-feeding per unit amount of produced fresh water, and effectively utilize wastewater or final effluent.

That is, according to the above method, there is an advantageous effect that it is possible to efficiently produce fresh water, while effectively utilize wastewater or final effluent.

However, fresh water produced by the above method results from the reuse of wastewater or final effluent. If this fresh water is used for domestic use (especially for drinking), for agricultural use (e.g., for a vegetable plant), or for a food factory, it may cause the user or the like to feel uncomfortable. Also, since molecules smaller than water molecule permeate through a reverse osmosis membrane (RO membrane), if wastewater or final effluent contains a matter with its molecules smaller than water molecule and may adversely affect on a human body, fresh water produced by the above method is never usable for domestic use (especially for drinking), agricultural use (e.g., for a vegetable plant) or a food factory.

In consideration of the above problems, an object of the present invention is to provide a fresh water generating apparatus and a fresh water generating method that are capable of efficiently producing fresh water according to an intended use, while utilizing wastewater.

**MEANS FOR SOLVING PROBLEMS**

According to the present invention, there is provided a fresh water generating apparatus equipped with a seawater-treating reverse osmosis membrane device that produces fresh water from seawater by a reverse osmosis membrane, which includes:

a mixing section that mixes wastewater as dilution water with a portion of seawater to be subjected to membrane treatment to produce mixed water; a first seawater-treating reverse osmosis membrane device that acts as the seawater-treating reverse osmosis membrane device to filter the mixed water; and a second seawater-treating reverse osmosis membrane device that acts as the seawater-treating reverse osmosis membrane device to filter the remaining portion of the seawater to be subjected to membrane treatment, in an unmixed state with the dilution water.

According to the above fresh water generating apparatus, in which wastewater having a lower salt concentration than seawater is mixed as dilution water with a portion of seawater to be subjected to membrane treatment to produced mixed water; and this mixed water is subjected to membrane treatment to produce fresh water, it is possible to prevent or suppress increase in pressure for pressure-feeding mixed water into the first reverse osmosis membrane device, as compared with the case where seawater is pressure-fed thereinto, and thus prevent or suppress increase in the amount of energy required for pressure feeding per unit amount of produced fresh water. If fresh water, which is produced by filtering the remaining portion of the seawater to be subjected to membrane treatment, in an unmixed state with the dilution water by the second seawater-treating reverse osmosis membrane device, is used for domestic purposes (especially for drinking), agricultural use (e.g., for a vegetable plant) and a food factory, there is an advantageous effect of eliminating fear, causing the user to feel uncomfortable or eliminating an adverse effect against a human body. That is, there is an advantageous effect that fresh water can be efficiently produced according to intended use.

The fresh water generating apparatus of the present invention preferably further includes a wastewater-treating reverse osmosis membrane device that produces concentrate and permeate that is fresh water from the wastewater by a reverse osmosis membrane, in which the apparatus is configured so that the concentrate that is wastewater is mixed as dilution water with seawater at the mixing section.

According to the above fresh water generating apparatus, in which permeate that is fresh water can be produced by the wastewater-treating reverse osmosis membrane device, there is an advantageous effect that fresh water can be more efficiently produced.

When wastewater is organic wastewater, the fresh water generating apparatus of the present invention preferably includes a biological treatment section that biologically treats the wastewater to produce biologically treated water and is configured so that the biologically treated water is mixed as dilution water with seawater at the mixing section.

According to the above fresh water generating apparatus, there is an advantageous effect that it is possible to prevent or suppress organic solid matter from adhering onto a membrane surface of the first seawater-treating reverse osmosis membrane device, and hence more efficiently produce fresh water. There is another advantageous effect that fresh water with higher purity can be produced.

The fresh water generating apparatus, which includes the biological treatment section and is configured so that the biologically treated water is mixed as dilution water with seawater at the mixing section, preferably includes a clarifier that filters the biologically treated water by at least one of a microfiltration membrane, an ultrafiltration membrane and a sand filtration device, in which the apparatus is configured so that permeate of the clarifier is mixed as dilution water with seawater at the mixing section.

According to the above fresh water generating apparatus, there is an advantageous effect that it is possible to prevent or suppress organic solid matter from adhering onto a membrane surface of the first seawater-treating reverse osmosis membrane device, and hence more efficiently produce fresh water. There is another advantageous effect that fresh water with higher purity can be produced.

The fresh water generating apparatus of the present invention preferably further includes a sedimentation section that separates wastewater by sedimentation to produce supernatant that is sedimentation treated water, in which the apparatus is configured so that the supernatant is mixed as dilution water with seawater at the mixing section.

According to the above fresh water generating apparatus, there is an advantageous effect that it is possible to prevent or suppress organic solid matter from adhering onto a membrane surface of the first seawater-treating reverse osmosis membrane device, and hence more efficiently produce fresh water. There is another advantageous effect that fresh water with higher purity can be produced.

The above fresh water generating apparatus, which includes the sedimentation section and is configured so that the supernatant is mixed as dilution water with seawater at the mixing section, preferably further includes a clarifier that filters the supernatant by at least one of a microfiltration membrane, an ultrafiltration membrane and a sand filtration device, in which the apparatus is configured so that permeate of the clarifier is mixed as dilution water with seawater at the mixing section.

According to the above fresh water generating apparatus, there is an advantageous effect that it is possible to prevent or suppress solid matter from adhering onto a membrane surface of the first seawater-treating reverse osmosis membrane device, and hence more efficiently produce fresh water. There is another advantageous effect that fresh water with higher purity can be produced.

When wastewater is organic wastewater, the fresh water generating apparatus, which includes the wastewater-treating reverse osmosis membrane device, preferably further includes a biological treatment section that biologically treats the wastewater to produce biologically treated water, and a clarifier that filters the biologically treated water by at least one of a microfiltration membrane, an ultrafiltration membrane and a sand filtration device, and is configured so that permeate of the clarifier is filtered as wastewater at the wastewater-treating reveres osmosis membrane device.

According to the above fresh water generating apparatus, there is an advantageous effect that it is possible to prevent or suppress organic solid matter from adhering onto a membrane surface of the wastewater-treating reverse osmosis membrane device, and hence more efficiently produce fresh water. There is another advantageous effect that fresh water with higher purity can be produced.

The fresh water generating apparatus, which includes the wastewater-treating reverse osmosis membrane device, preferably further includes a sedimentation section that separates wastewater by sedimentation to produce supernatant that is sedimentation treated water, and a clarifier that filters the supernatant by at least one of a microfiltration membrane, an ultrafiltration membrane and a sand filtration device, in which the apparatus is configured so that permeate of the clarifier is filtered as wastewater at the wastewater-treating reverse osmosis membrane device.

According to the above fresh water generating apparatus, there is an advantageous effect that it is possible to prevent or suppress solid matter from adhering onto a membrane surface of the wastewater-treating reverse osmosis membrane device, and hence more efficiently produce fresh water. There is another advantageous effect that fresh water with higher purity can be produced.

The fresh water generating apparatus, which includes the biological treatment section and the clarifier, preferably includes a biological treatment tank for biological treatment, in which the clarifier includes at least one of a microfiltration membrane and an ultrafiltration membrane, and the clarifier is installed as a submerged membrane below the liquid level within the biological treatment tank.

According to the above fresh water generating apparatus, when activated sludge is used in biological treatment, it is possible to produce only permeate, which contains almost no activated sludge, from biologically treated water containing activated sludge through the submerged membrane. Thus, there is an advantageous effect that the microbial concentration within the biological treatment tank can be easily increased and hence the volume of the biological treatment tank can be reduced. Also, there is an advantageous effect that the fresh water generating apparatus itself can be more reduced in size, as compared with the case where the clarifier is installed outside the biological treatment tank, and it is possible to eliminate the necessity to provide a conduit for returning sludge concentrated at the clarifier to the biological treatment tank.

Furthermore, the fresh water generating apparatus of the present invention preferably includes an ion exchange device that produces ion exchanged water by ion exchange from fresh water produced from the seawater-treating reverse osmosis membrane device.

According to the above fresh water generating apparatus, there is an advantageous effect that ion exchanged water that is fresh water with a low salt concentration can be produced. For example, fresh water, which is a source of water vapor causing rotation of a steam turbine for use in a thermal power plant or the like, preferably has a low salt concentration so as to be able to be efficiently evaporated into vapor with small heat. Since this ion exchanged water has a low salt concentration, the fresh water generating apparatus including the ion exchange device can be appropriately used in producing fresh water for use in a steam turbine.

According to another aspect of the present invention, there is provided a fresh water generating method for producing fresh water from seawater by a seawater-treating reverse osmosis membrane device having a reverse osmosis membrane, including:

mixing wastewater as dilution water with a portion of seawater to be subjected to membrane treatment to produce mixed water; filtering the mixed water by a first seawater-treating reverse osmosis membrane device that acts as the seawater-treating reverse osmosis membrane device; and filtering the remaining portion of the seawater to be subjected to membrane treatment, in an unmixed state with the dilution water by a second seawater-treating reverse osmosis membrane device that acts as the seawater-treating reverse osmosis membrane device.

## ADVANTAGES OF THE INVENTION

As described above, according to the present invention, it is possible to efficiently produce fresh water according to an intended use, while utilizing wastewater.

## BRIEF DESCRIPTION OF THE DRAWINGS

Fig. 1 is a schematic block diagram of a fresh water generating apparatus according to one embodiment of the present invention.
Fig. 2 is a schematic block diagram of a fresh water generating apparatus according to one embodiment of the present invention.
Fig. 3 is a schematic block diagram of a fresh water generating apparatus according to Comparative Example 1.
Fig. 4 is a schematic block diagram of a fresh water generating apparatus according to Example 1.

## EMBODIMENT TO CARRY OUT THE INVENTION

Now, the description will be made for embodiments of the present invention with reference to the drawings attached hereto.

First, the description will be made for a fresh water generating apparatus of this embodiment.

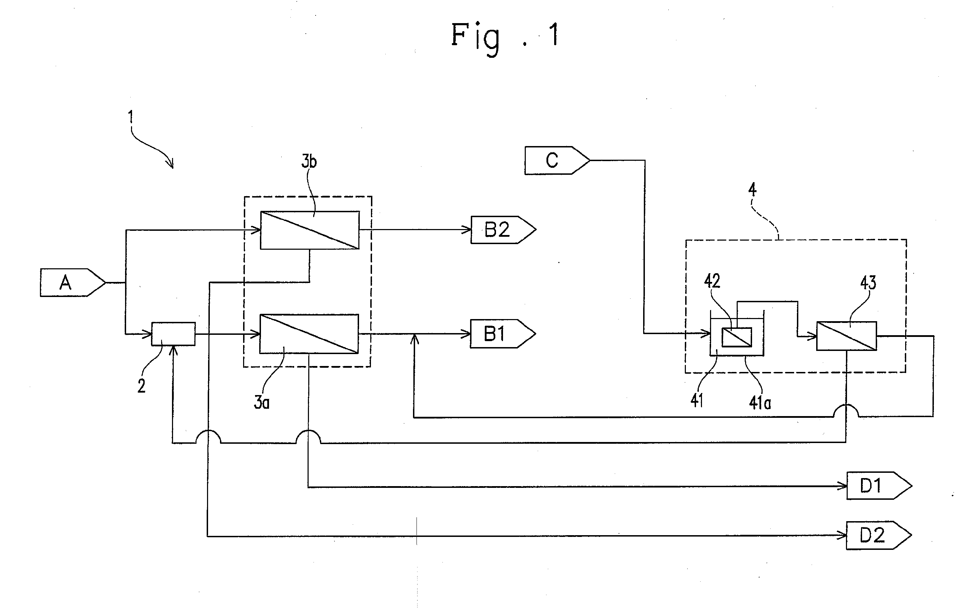

As shown in Fig. 1, a fresh water generating apparatus 1 of this embodiment is configured so that fresh water B1 and B2 are produced from seawater A by way of filtration using reverse osmosis membrane devices 3a and 3b.

The fresh water generating apparatus 1 of this embodiment includes a mixing section 2 that mixes wastewater C as dilution water with a portion of seawater A to be subjected to membrane treatment to produce mixed water, a first seawater-treating reverse osmosis membrane device 3a that filters the mixed water to produce first concentrate D1 and first permeate that is first fresh water B1, and a second seawater-treating reverse osmosis membrane device 3b that filters the remaining portion of the seawater A to be subjected to membrane, in an unmixed state with the dilution water, to produce second concentrate D2 and second permeate that is second fresh water B2.

The fresh water generating apparatus 1 of this embodiment is configured so that a portion of the seawater A to be subjected to membrane treatment is transferred to the mixing section 2; wastewater C is transferred as dilution water to the mixing section 2; mixed water is transferred to the first seawater-treating reverse osmosis membrane device 3a; the remaining portion of the seawater A to be subjected to membrane treatment is transferred to the second seawater-treating reverse osmosis membrane device 3b; the first concentrate D1 is transferred to a first concentrate storage tank (not shown); and the second concentrate D2 is transferred to a second concentrate storage tank (not shown).

The fresh water generating apparatus 1 of this embodiment is also configured so that the seawater A is filtered by using a clarifier (not shown) that includes at least one of a microfiltration membrane, an ultrafiltration membrane and a sand filtration device, before the seawater A is transferred to the mixing section 2 and the second seawater-treating reverse osmosis membrane device 3b, respectively.

The seawater A is water containing salt, and, for example, the seawater A to be diluted with dilution water is water having a salt concentration of 1.0 to 8.0 % by mass, and more specifically, water having a salt concentration of 2.5 to 6.0 % by mass.

The seawater A is not herein necessarily limited to water in the sea, and is intended to include water in land area, such as water of lake (salt lake, brackish lake), water of swamps, and water of pond, as long as they are water having a salt concentration of 1.0 % by mass or more.

The produced fresh water B1 and B2 can be used as service water, such as industrial water (water for a food factory, a pulp plant, a steel factory, a chemical factory and a factory in electronics industry), water for domestic use (e.g., drinking water or the like), and water for agricultural use.

Especially, when the fresh water B2, which is fresh water produced by filtering the seawater A in an unmixed state with the wastewater C, is used as water for domestic use (drinking water or the like), water for agricultural use (e.g., water for a vegetable plant) or water for a food factory, there is an advantageous effect of eliminating fear causing the user to feel uncomfortable or eliminating an adverse effect against a human body or the like.

The fresh water generating apparatus 1 of this embodiment is configured so that the fresh water B1 and B2 are transferred as service water to various sites at which they are used.

Furthermore, the fresh water generating apparatus 1 of this embodiment includes a purification section 4 that purifies wastewater C.

The fresh water generating apparatus 1 of the this embodiment is configured so that wastewater C is transferred to the purification section 4.

The wastewater C is organic wastewater.

The organic wastewater is wastewater containing organic matter, and, for example, wastewater having a BOD (Biochemical Oxygen Demand), as an index of organic matter concentration, of 2000 mg/L or lower, and more specifically wastewater having a BOD of about 200 mg/L. The organic wastewater is water having a salt concentration lower than the seawater A to be diluted with dilution water. The organic wastewater is, for example, wastewater having a salt concentration ratio relative to the seawater A to be diluted with dilution water being 1 to 0.1 or lower, and is more specifically wastewater having a salt concentration ratio relative to the seawater A to be diluted with dilution water being 1 to 0.01 or lower.

The purification section 4 includes a biological treatment section 41 that biologically treats the wastewater C to produce biologically treated water, a clarifier 42 that filters and clarifies the biologically treated water by at least one of a microfiltration membrane and an ultrafiltration membrane to produce concentrate and permeate, and a wastewater-treating reverse osmosis membrane device 43 that produces concentrate and permeate that is the first fresh water B1 by a reverse osmosis membrane (RO membrane) from the permeate produced as the wastewater C from the clarifier 42.

By the clarifying is herein meant rougher filtration than reverse osmosis membrane filtration, that is, a treatment carried out prior to the filtration by a reverse osmosis membrane device to remove impurities (e.g., solid matter or the like) coarser than those filtered by a reverse osmosis membrane (RO membrane).

The biological treatment section 41 includes a biological treatment tank 41a for biological treatment.

By the biological treatment is herein meant decomposition of organic matter contained in water with biological species, such as bacteria, protozoa and metazoan. A specific example of such treatment includes aeration using activated sludge.

In the purification section 4, the clarifier 42 is installed as a submerged membrane below the liquid level within the biological treatment tank 41a.

The purification section 4 is configured so that the wastewater C is transferred to the biological treatment section 41, and permeate of the clarifier 42 is transferred to the wastewater-treating reverse osmosis membrane device 43.

The fresh water generating apparatus 1 of this embodiment is also configured so that concentrate of the wastewater-treating reverse osmosis membrane device 43 is mixed as dilution water with the seawater A at the mixing section 2.

Furthermore, the fresh water generating apparatus 1 of this embodiment is configured so that concentrate of the wastewater-treating reverse osmosis membrane device 43 is transferred as dilution water to the mixing section 2, and permeate of the wastewater-treating reverse osmosis membrane device 43 is transferred as service water to various sites at which it is used.

Thus, the fresh water generating apparatus of this embodiment has the above configuration, and the description will be hereinafter made for a fresh water generating method of this embodiment.

The fresh water generating method of this embodiment includes: mixing a portion of the seawater A to be subjected to membrane treatment with wastewater as dilution water to produce mixed water; filtering the mixed water by the first seawater-treating reverse osmosis membrane device 3a to produce first concentrate D1 and first permeate that is first fresh water B1; and filtering the remaining portion of the seawater A to be subjected to membrane treatment, in an unmixed state with the dilution water, by the second seawater-treating reverse osmosis membrane device 3b to produce second concentrate D2 and second permeate that is second fresh water B2. The seawater A is filtered by using a clarifier (not shown) that includes at least one of a microfiltration membrane, an ultrafiltration membrane and a sand filtration device, before the seawater A is transferred to the mixing section 2 and the second seawater-treating reverse osmosis membrane device 3b.

Furthermore, according to the fresh water generating method of this embodiment, in order to make clear the dilution effect, the mixing ratio by volume of the seawater A to dilution water is preferably 1 to 0.1 or higher, and more preferably 1 to 1 or higher.

Still furthermore, according to the fresh water generating method of this embodiment, the salt concentration of the mixed water is preferably 3.0 % by mass or lower, and more preferably 1.8 % by mass or lower. Yet furthermore, according to the fresh water generating method of this embodiment, the salt concentration of dilution water is preferably 1/3 (one third) or lower of the salt concentration of the seawater A to be diluted with the dilution water, and more preferably 1/10 (one tenth) or lower of the salt concentration of the seawater A to be diluted with the dilution water. The fresh water generating method of this embodiment produces an advantageous effect that fresh water with higher purity can be produced by making the salt concentration of the dilution water 1/3 (one third) or lower of the salt concentration of the seawater A to be diluted with the dilution water.

The fresh water generating apparatus and the fresh water generating method of this embodiment are not necessarily limited to the above configuration and may be subjected to appropriate modification.

Specifically, in the fresh water generating apparatus 1 of this embodiment, the clarifier 42 is installed as a submerged membrane below the liquid level of the biological treatment tank 41a. However, in the fresh water generating apparatus 1 of the present invention, the clarifier 42 may be of the type that is installed outside the biological treatment tank 41a. In this case, the fresh water generating apparatus 1 of the present invention is configured so that biologically treated water produced at the biological treatment tank 41a is transferred to the clarifier 42.

Although the fresh water generating apparatus 1 of this embodiment includes the wastewater-treating reverse osmosis membrane device 43, the fresh water generating apparatus 1 of the present invention may not include the wastewater-treating reverse osmosis membrane device 43. In this case, the fresh water generating apparatus 1 of the present invention is configured so that permeate of the clarifier 42 is mixed as dilution water with seawater at the mixing section 2.

Furthermore, the fresh water generating apparatus 1 of the present invention may not include the clarifier 42. In this case, the fresh water generating apparatus 1 of the present invention is configured so that biologically treated water produced at the biological treatment section 41 is mixed as dilution water with seawater at the mixing section 2.

Still furthermore, in a case where the clarifier 42 is of the type that is installed outside the biological treatment tank 41a, the fresh water generating apparatus 1 of the present invention may be configured so that the clarifier 42 filters and clarifies biologically treated water by a sand filtration device in place of a microfiltration membrane or an ultrafiltration membrane.

Although the fresh water generating apparatus 1 of this embodiment includes the biological treatment section 41, the fresh water generating apparatus 1 of the present invention may include a sedimentation section (not shown) in place of the biological treatment section 41 to separate the wastewater C by sedimentation to produce supernatant that is sedimentation treated water. In this case, the fresh water generating apparatus 1 of the present invention is configured so that the clarifier 42 is of the type that is installed outside a tank so that sedimentation treated water produced at the sedimentation section (not shown) is transferred to the clarifier 42. Also, in this case, in a similar manner to the fresh water generating apparatus 1 of this embodiment, the wastewater-treating reverse osmosis membrane device 43 may not be provided, and, furthermore, the clarifier 42 may not be provided.

According to the fresh water generating apparatus 1 of this embodiment, the wastewater C is organic wastewater, but, according to the fresh water generating apparatus 1 of the present invention, the wastewater C may be inorganic wastewater.

The inorganic wastewater is wastewater containing inorganic matter, and, for example, wastewater having a BOD (Biochemical Oxygen Demand) of 50 mg/L or lower, and preferably wastewater having a BOD of 10 mg/L or lower.

The inorganic wastewater is water having a salt concentration lower than the seawater A to be diluted with dilution water. The inorganic wastewater is, for example, wastewater having a salt concentration ratio relative to the seawater to be diluted with dilution water of 1 to 0.1 or lower, and more specifically wastewater having a salt concentration ratio relative to the seawater to be diluted with dilution water of 1 to 0.01 or lower.

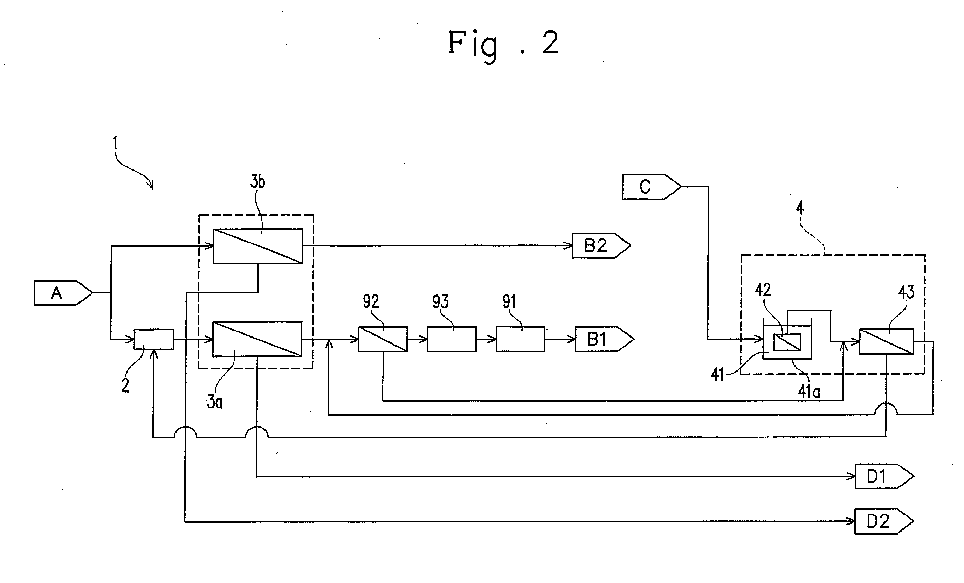

As shown in Fig. 2, the fresh water generating apparatus 1 of the present invention includes a mixed bed ion exchange device 91, into which cation-exchange resin and anion-exchange resin are filled in mixed state, so that ion exchanged water is produced by ion exchange of these resins from fresh water produced from the first seawater-treating reverse osmosis membrane device 3a.

The fresh water generating apparatus 1 of the present invention having the above configuration produces an advantageous effect that ion exchanged water that is fresh water having a low salt concentration can be produced. For example, fresh water, which is a source of water vapor causing rotation of a steam turbine for use in a thermal power plant or the like, preferably has a low salt concentration so as to be able to be efficiently evaporated into vapor with small heat. Since the ion exchanged water has a low salt concentration, the fresh water generating apparatus 1 is preferably used to produce ion exchanged water that is fresh water B1 for use in a steam turbine.

The mixed bed ion exchange device 91 is configured so that ion exchanged water is produced from mixed fresh water produced by mixing fresh water produced from the first seawater-treating reverse osmosis membrane device 3a with fresh water produced from the wastewater-treating reverse osmosis membrane device 43.

The fresh water generating apparatus 1 also includes a mixed fresh water-treating reverse osmosis membrane device 92 that produces permeate and concentrate from the mixed fresh water by a reverse osmosis membrane. This fresh water generating apparatus 1 is configured so that permeate that is fresh water produced from the mixed fresh water-treating reverse osmosis membrane device 92 is ion-exchanged by using the mixed bed ion exchange device 91 to produce ion exchanged water.

Generally, the ion exchange performance of ion exchange resins of the mixed bed ion exchange device 91 deteriorates by salt. When the ion exchange performance deteriorates, there is a problem that the ion exchange resins must be brought into contact with a regeneration chemical (e.g., acid aqueous solution such as hydrochloric acid aqueous solution, and alkaline aqueous solution such as sodium hydroxide aqueous solution, and the like) to regenerate the ion exchange resins. Thus, it is desirable that subject water (water to be treated) introduced into the mixed bed ion exchange device 91 has a concentration equal to or lower than a predetermined level (e.g., equal to or lower than the ppb level). Thus, the fresh water generating apparatus 1 provided with the mixed fresh water-treating reverse osmosis membrane device 92 is advantageous in that the salt concentration of fresh water introduced into the mixed bed ion exchange device 91 is reduced, so that the loading by salt to the mixed bed ion exchange device 91 is reduced and hence the frequency of regenerating the ion exchange resins (regeneration frequency) can be reduced.

The above fresh water generating apparatus 1 may be configured so that concentrate produced from the mixed fresh water-treating reverse osmosis membrane device 92 is transferred to the wastewater-treating reverse osmosis membrane device 43. In this case, the fresh water generating apparatus 1 is configured so that the concentrate is membrane-separated by the wastewater-treating reverse osmosis membrane device 43.

Furthermore, the above fresh water generating apparatus 1 includes a degassing device 93 that removes gas such as carbon dioxide from the mixed fresh water to produce degassed water. This fresh water forming apparatus 1 is configured so that the degassed water that is fresh water is ion-exchanged by using the mixed bed ion exchange device 91 to produce ion exchanged water.

If gas such as carbon dioxide, which ionizes in water and generates anion, is dissolved into fresh water introduced into the mixed bed ion exchange device 91, breakthrough of the anion exchange resin may easily occur by this gas. Thus, the fresh water generating apparatus 1, which includes the degassing device 93, reduces the gas concentration of fresh water introduced into the mixed bed ion exchange device 91, and thereby prevents the breakthrough of an ion exchange resin from easily occurring. Hence, there is an advantageous effect that the regeneration frequency can be reduced.

Also, as a result of the reduction of the regeneration frequency, there are advantageous effects that the amount of the regeneration chemical to be used is reduced, the loading by the regeneration chemical is reduced, and hence the operational life of an ion exchange resin itself can be extended.

Still furthermore, the above fresh water generating apparatus 1 is configured so that permeate is produced from the mixed fresh water by the mixed fresh water-treating reverse osmosis membrane device 92; degassed water is produced from the permeate by the degassing device 93; and ion exchanged water is produced from the degassed water by the mixed bed ion exchange device 91.

The fresh water generating apparatus 1 of the present invention may include various deionization devices (ion exchange device), such as an electrodeionization device, in place of the mixed bed ion exchange device 91.

Although not illustrated, the fresh water generating apparatus 1 of the present invention may include a mixed bed ion exchange device that produces ion exchanged water from fresh water produced from the second seawater-treating reverse osmosis membrane device 3b, in place of or in addition to the mixed bed ion exchange device 91 that produces ion exchanged water from fresh water produced from the first seawater-treating reverse osmosis membrane device 3a.

In the embodiment in which the mixed fresh water-treating reverse osmosis membrane device 92 is not provided, the fresh water generating apparatus 1 of the present invention may be configured so that, without producing the mixed fresh water, degassed water is produced by degassing, by the degassing device 93, fresh water produced from the first seawater-treating reverse osmosis membrane device 3a.

**EXAMPLES**

Now, more specific description will be made for the present invention with reference to Examples and Comparative Examples.

According to the later described methods of Example 1 and Comparative Example 1, the energy (energy index) required in producing fresh water as water for domestic use (including drinking water) at 10 t/d and producing fresh water as industrial water at 30 t/d was calculated.

The energy indices were calculated by using the values shown in Table 1 as operation pressure in the following membrane treatments: (Treatment 1), in which seawater, which has not been diluted, is subjected to membrane treatment by a reverse osmosis membrane (RO membrane); (Treatment 2), in which mixed water of seawater and dilution water is subjected to membrane treatment by a reverse osmosis membrane (RO membrane); and (Treatment 3), in which permeate produced by purification treatment of wastewater C according to a membrane-separation activated sludge method (MBR) is subjected to membrane treatment by a reverse osmosis membrane (RO membrane). Specifically, the energy indices were calculated by the following expression. The wastewater C is organic wastewater.

$$\text{Energy index} = \text{amount of water flown into a membrane per unit time}$$

$$(\text{water flow rate}) \times \text{operation pressure}$$

Table 1

|  | Operation pressure MPa |
|---|---|
| Treatment 1 | 7.0 |
| Treatment 2 | 3.5 |
| Treatment 3 | 1.0 |

(Comparative Example 1)

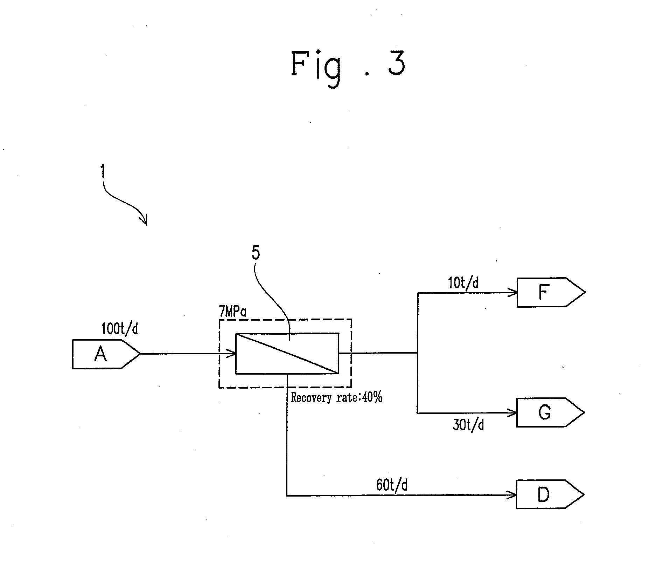

The energy index required in the configuration of Fig. 3, in which fresh water and concentrate D are produced from seawater A, which has not been diluted, by the reverse osmosis membrane device 5, was calculated. By the fresh water is herein meant domestic water F and industrial water G.

(Example 1)

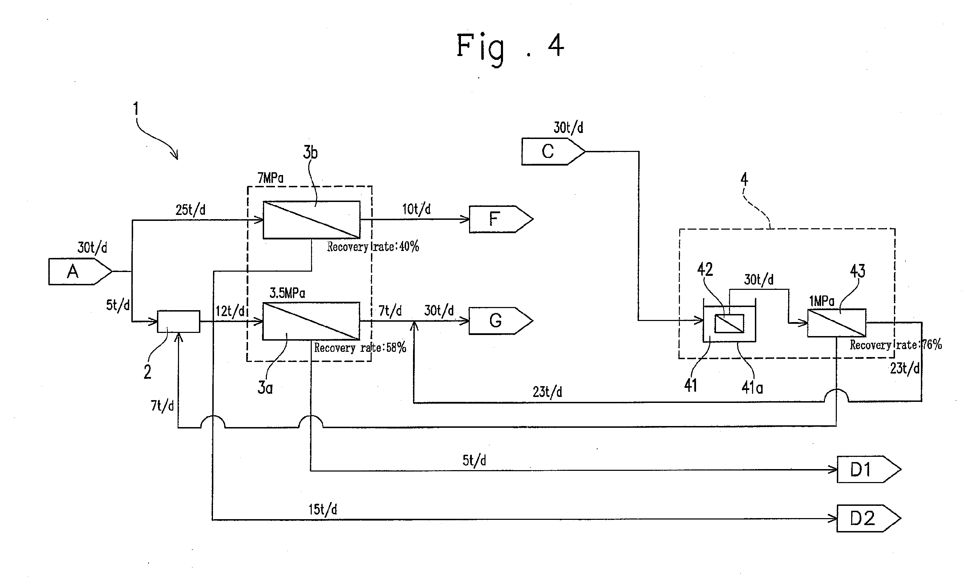

The power index value required in a configuration of Fig. 4, in which mixed water is produced by mixing dilution water with a portion of seawater A to be subjected to membrane treatment by the mixing section 2; first concentrate D1 and permeate that is industrial water G (fresh water) are produced from the mixed water by the first seawater-treating reverse osmosis membrane device 3a; permeate is produced by a membrane-separation activated sludge treatment device (the biological treatment section 41 and the clarifier 42) from wastewater C; permeate and concentrate are produced from the permeate of the membrane-separation activated sludge treatment device by the wastewater-treating reverse osmosis membrane device 43; wastewater C that is the concentrate is mixed as the dilution water with seawater A at the mixing section 2; and second concentrate D2 and permeate that is domestic water F (fresh water) are produced from the remaining portion of the seawater A to be subjected to membrane treatment by the second seawater-treating reverse osmosis membrane device 3b, was calculated.

The results are shown in Tables 2 and 3, respectively. Table 2 shows the energy index required for producing the domestic water F and the industrial water G, as well as the discharge rate, and Table 3 shows the energy index required in producing only the industrial water G, as well as the discharge rate. By the discharge rate is herein meant the total of the rate of fresh water and the discharge rate of water, which has been discharged while not being reused.

Table 2

|  | Treatment 1 | | | Treatment 2 | | | Treatment 3 | | | Total of energy index MPa·t/d | Discharge rate m³/d |
|---|---|---|---|---|---|---|---|---|---|---|---|
|  | Amount of water t/d | Operation pressure MPa | Energy index MPa·t/d | Amount of water t/d | Operation pressure MPa | Energy index MPa·t/d | Amount of water t/d | Operation pressure MPa | Energy index MPa·t/d | | |
| Comparative Example 1 | 100 | 7 | 700 | — | – | – | – | – | – | 700 | 100 |
| Example 1 | 25 | 7 | 175 | 12 | 3.5 | 42 | 30 | 1 | 30 | 247 | 60 |

Table 3

| | Treatment 1 | | | Treatment 2 | | | Treatment 3 | | | Total of energy index MPa·t/d | Discharge rate m³/d |
|---|---|---|---|---|---|---|---|---|---|---|---|
| | Amount of water t/d | Operation pressure MPa | Energy index MPa·t/d | Amount of water t/d | Operation pressure MPa | Energy index MPa·t/d | Amount of water t/d | Operation pressure MPa | Energy index MPa·t/d | | |
| Comparative Example 1 | 75 | 7 | 525 | – | – | – | – | – | – | 525 | 45 |
| Example 1 | – | – | – | 12 | 3.5 | 42 | 30 | 1 | 30 | 72 | 35 |

As shown in Tables 2 and 3, in Example 1, it is shown that fresh water can be efficiently and stably produced, as compared with Comparative Example 1.

**DESCRIPTION OF THE REFERENCE NUMERALS**

1: fresh water generating apparatus, 2: mixing section, 3a: first seawater-treating reverse osmosis membrane device, 3b: second seawater-treating reverse osmosis membrane device, 4: purification section, 5: reverse osmosis membrane device, 41: biological treatment section, 41a: biological treatment tank, 42: clarifier, 43: wastewater-treating reverse osmosis membrane device, 91: mixed bed ion exchange device, 92: mixed fresh water-treating reverse osmosis membrane device, 93: degassing device, A: seawater, B: fresh water, B1: first fresh water, B2: second fresh water, C: wastewater, D: concentrate, D1: first concentrate, D2: second concentrate, F: domestic water, G: industrial water

**Claims**

1.  A fresh water generating apparatus equipped with a seawater-treating reverse osmosis membrane device that produces fresh water from seawater by a reverse osmosis membrane, comprising:

    a mixing section that mixes wastewater as dilution water with a portion of seawater to be subjected to membrane treatment to produce mixed water; a first seawater-treating reverse osmosis membrane device that acts as the seawater-treating reverse osmosis membrane device to filter the mixed water; and a second seawater-treating reverse osmosis membrane device that acts as the seawater-treating reverse osmosis membrane device to filter the remaining portion of the seawater to be subjected to membrane treatment, in an unmixed state with the dilution water.

2.  The fresh water generating apparatus according to claim 1, further comprising a wastewater-treating reverse osmosis membrane device that produces concentrate and permeate that is fresh water from the wastewater by a reverse osmosis membrane, wherein the apparatus is configured so that the concentrate that is wastewater is mixed as dilution water with seawater at the mixing section.

3.  The fresh water generating apparatus according to claim 1, wherein wastewater is organic wastewater, and the apparatus further comprises a biological treatment section that biologically treats the wastewater to produce biologically treated water and is configured so that the biologically treated water is mixed as dilution water with seawater at the mixing section.

4.  The fresh water generating apparatus according to claim 3, further comprising a clarifier that filters the biologically treated water by at least one of a microfiltration membrane, an ultrafiltration membrane and a sand filtration device, wherein the apparatus is configured so that permeate of the clarifier is mixed as dilution water with seawater at the mixing section.

5. The fresh water generating apparatus according to claim 1, further comprising a sedimentation section that separates wastewater by sedimentation to produce supernatant that is sedimentation treated water, wherein the apparatus is configured so that the supernatant is mixed as dilution water with seawater at the mixing section.

6. The fresh water generating apparatus according to claim 5, further comprising a clarifier that filters the supernatant by at least one of a microfiltration membrane, an ultrafiltration membrane and a sand filtration device, wherein the apparatus is configured so that permeate of the clarifier is mixed as dilution water with seawater at the mixing section.

7. The fresh water generating apparatus according to claim 2, wherein wastewater is organic wastewater, and the apparatus further comprises a biological treatment section that biologically treats the wastewater to produce biologically treated water, and a clarifier that filters the biologically treated water by at least one of a microfiltration membrane, an ultrafiltration membrane and a sand filtration device, and is configured so that permeate of the clarifier is filtered as wastewater at the wastewater-treating reveres osmosis membrane device.

8. The fresh water generating apparatus according to claim 2, further comprising a sedimentation section that separates wastewater by sedimentation to produce supernatant that is sedimentation treated water, and a clarifier that filters the supernatant by at least one of a microfiltration membrane, an ultrafiltration membrane and a sand filtration device, wherein the apparatus is configured so that permeate of the clarifier is filtered as wastewater at the wastewater-treating reverse osmosis membrane device.

9. The fresh water generating apparatus according to any one of claims 4 and 7, further comprising a biological treatment tank for biological treatment, wherein the clarifier includes at least one of a microfiltration membrane and an ultrafiltration membrane, and the clarifier is installed as a submerged membrane below the liquid level within the biological treatment tank.

10. The fresh water generating apparatus according to any one of claims 1-8, further comprising an ion exchange device that produces ion exchanged water by ion exchange from fresh water produced from the seawater-treating reverse osmosis membrane device.

11. The fresh water generating apparatus according to claim 9, further comprising an ion exchange device that produces ion exchanged water by ion exchange from fresh water produced from the seawater-treating reverse osmosis membrane device.

12. A fresh water generating method for producing fresh water from seawater by a seawater-treating reverse osmosis membrane device having a reverse osmosis membrane, comprising:

mixing wastewater as dilution water with a portion of seawater to be subjected to membrane treatment to produce mixed water; filtering the mixed water by a first seawater-treating reverse osmosis membrane device that acts as the seawater-treating reverse osmosis membrane device; and filtering the remaining portion of the seawater to be subjected to membrane treatment, in an unmixed state with the dilution water by a second seawater-treating reverse osmosis membrane device that acts as the seawater-treating reverse osmosis membrane device.

Fig.1

Fig . 2

EP 2 581 347 A1

EP 2 581 347 A1

# Fig . 3

1

5

7MPa

100t/d

A

Recovery rate:40%

10t/d

F

30t/d

G

60t/d

D

Fig . 4

EP 2 581 347 A1

<table>
<tr><td colspan="2" align="center">**INTERNATIONAL SEARCH REPORT**</td><td colspan="2">International application No.<br>PCT/JP2011/060915</td></tr>
</table>

**A. CLASSIFICATION OF SUBJECT MATTER**
*C02F1/44*(2006.01)i, *B01D21/00*(2006.01)i, *B01D21/24*(2006.01)i, *B01D61/02*(2006.01)i, *B01D61/14*(2006.01)i, *B01D61/58*(2006.01)i, *C02F3/12*(2006.01)i

According to International Patent Classification (IPC) or to both national classification and IPC

**B. FIELDS SEARCHED**

Minimum documentation searched (classification system followed by classification symbols)
C02F1/44, B01D21/00, B01D21/24, B01D61/02, B01D61/14, B01D61/58, C02F3/12

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2010/61879 A1 (Kobelco Eco-Solutions Co., Ltd.),<br>03 June 2010 (03.06.2010),<br>paragraphs [0049] to [0232]<br>& US 2011/0042306 A | 1-12 |
| Y | JP 2008-161797 A (Toray Industries, Inc.),<br>17 July 2008 (17.07.2008),<br>claims 1, 8; paragraph [0020]<br>(Family: none) | 1-12 |
| Y | JP 2006-346543 A (Asahi Kasei Chemicals Corp.),<br>28 December 2006 (28.12.2006),<br>paragraphs [0094] to [0097]<br>& US 2010/0264084 A1 & EP 1900691 A1 | 10,11 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 August, 2011 (08.08.11) | Date of mailing of the international search report<br>16 August, 2011 (16.08.11) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008055317 A